# DEMANDE DE BREVET EUROPEEN

(11) **EP 2 818 681 A1**
(43) Date de publication de la demande: **31.12.2014**
(21) Numéro de dépôt: 14170288.6
(22) Date de dépôt: 28.05.2014
(51) Int. Cl.: F02M 25/07, F02D 13/02

(54) **Moteur à combustion de véhicule automobile à recirculation d'échappement améliorée**

(30) Priorité: 24.06.2013 FR 1355986
(71) Demandeur: PEUGEOT CITROËN AUTOMOBILES SA, 78140 Velizy-Villacoublay (FR)
(72) Inventeur: Jan, Marc, 92350 LE PLESSIS ROBINSON (FR); Veiga Pagliari, Diego Rafael, 75012 PARIS (FR); Dupuis, Arnaud, 75018 PARIS (FR)

(57) **Abrégé**

L'invention concerne un moteur à combustion de véhicule automobile à réintroduction de gaz d'échappement, le moteur étant configuré pour mettre en oeuvre deux modes de fonctionnement, l'un nominal où deux ouvertures d'admission (45,46) sont utilisées en tant qu'ouvertures d'admission, l'autre où des gaz d'échappement sont réintroduits via une ouverture d'admission du mode nominal.

## Description

L'invention concerne les moteurs à combustion de véhicules automobiles dotés d'un système de recirculation de gaz d'échappement issus d'au moins un cylindre vers l'admission d'air des cylindres.

De tels systèmes sont bien connus sous le sigle EGR correspondant à la locution anglo-américaine Exhaust Gaz Recirculation. On a notamment proposé, dans les moteurs à plusieurs cylindres, de dédier un cylindre à la recirculation des gaz d'échappement, les gaz d'échappement de ce cylindre étant totalement réintroduits dans le collecteur d'admission du moteur. Dans de tels moteurs, les gaz d'échappement réintroduits à l'admission sont typiquement chargés en gaz dihydrogène du fait d'un fonctionnement dans lequel le ou les cylindres dont on réintroduit les gaz d'échappement fonctionnent avec un mélange air-carburant de type riche. De tels moteurs sont connus sous l'appellation D-EGR pour Dedicated Exhaust Gaz Recirculation en anglais ou à système dédié de réintroduction ou recirculation de gaz d'échappement.

La présence d'hydrogène permet d'améliorer la stabilité de la combustion et donc la tolérance à l'EGR. Le moteur D-EGR permet de réduire les pertes par pompage à l'admission du moteur pour les points de charge partielle, et de repousser la limite à partir de laquelle apparait un cliquetis pour les points de pleine charge. Il est avantageux d'avoir une machine de suralimentation suffisamment performante pour rétablir le débit d'air nécessaire et ainsi conserver voire augmenter les performances du moteur. Le gaz dihydrogène combiné à l'EGR permet donc au moteur de supporter des fort taux d'EGR ainsi qu'un taux de compression potentiellement élevé.

Plus précisément, la recirculation des gaz d'échappement permet d'améliorer le rendement thermodynamique via la réduction des transferts thermiques grâce à la réintroduction de gaz réintroduits qui sont froids, via le retardement de l'apparition du cliquetis grâce à la réintroduction d'EGR combiné à l'hydrogène, via la diminution de l'enrichissement lié à la température d'échappement grâce à la réintroduction de gaz d'échappement, via la diminution des pertes par pompage grâce à la réintroduction de gaz d'échappement, et via l'augmentation du taux de compression grâce à la réintroduction de gaz d'échappement combinés à l'hydrogène..

Un débit élevé d'EGR avec du gaz dihydrogène produit à la fois dans la chambre de combustion en mélange riche et dans un reformeur sur la ligne de réintroduction des gaz d'échappement permet d'améliorer la physique de la combustion du moteur en obtenant une plus forte robustesse au cliquetis et un phasage de la combustion idéal dans une plage élargie de charge du moteur, permettant d'obtenir des gains en consommation spécifique non négligeables.

Toutefois, si les moteurs sans réintroduction de gaz d'échappement à l'admission présentent des limitations, les moteurs EGR et les moteurs D-EGR présentent également leurs limitations propres. Ainsi, les moteurs EGR et D-EGR présentent des instabilités de combustion sur certaines zones de fonctionnement du moteur, par exemple à moteur froid ou dans les régimes transitoires. Dans les systèmes EGR et D-EGR, il n'y a typiquement pas de gestion du taux d'EGR, ni de possibilité de gestion de mode sans EGR sans implantation d'un système de dérivation des gaz du cylindre dédié directement à l'échappement. Un fonctionnement permanent du cylindre D-EGR à une richesse très importante représente en outre un risque d'usure importante par phénomène de lavage du cylindre. De plus, les moteurs à turbocompresseur présentent souvent une perte d'énergie à la turbine avec l'impossibilité d'obtenir le même couple sans modification du système de la boucle d'air.

Le but de l'invention est de proposer un moteur qui combine à la fois les avantages d'un moteur sans réintroduction de gaz d'échappement à l'admission, d'un moteur EGR et d'un moteur D-EGR.

Ce but est atteint selon l'invention grâce à un moteur à combustion de véhicule automobile à réintroduction de gaz d'échappement comprenant plusieurs cylindres de combustion, un organe d'admission d'air frais en direction d'un ou plusieurs cylindres et une ligne de réintroduction de gaz d'échappement depuis au moins un cylindre de combustion dans l'organe d'admission, ledit au moins un cylindre dont au moins une partie des gaz d'échappement sont réintroduits dans l'organe d'admission comportant au moins deux ouvertures d'admission, le moteur étant caractérisé en ce qu'il est configuré pour mettre en oeuvre deux modes de fonctionnement, l'un nominal où les deux ouvertures d'admission sont utilisées en tant qu'ouvertures d'admission, l'autre à réintroduction de gaz d'échappement où des gaz d'échappement sont réintroduits dans l'organe d'admission via une ouverture donnée parmi lesdites au moins deux ouvertures utilisées en tant qu'ouvertures d'admission dans le mode nominal.

Avantageusement, le mode de fonctionnement à réintroduction de gaz d'échappement comporte deux sous-modes, un premier sous-mode où le cylindre dont au moins une partie des gaz d'échappement sont réintroduits dans l'organe d'admission fonctionne à richesse supérieure à 1 de sorte qu'il produit du gaz dihydrogène et un deuxième sous-mode où le cylindre dont au moins une partie des gaz d'échappement sont réintroduits dans l'organe d'admission fonctionne à richesse égale à 1.

Avantageusement, le moteur est configuré pour que dans le premier sous-mode à richesse supérieure à 1 au moins une ouverture du cylindre utilisée en tant qu'ouverture d'échappement dans le mode nominal reste(nt) fermée(s).

Avantageusement, le moteur est configuré pour que dans le deuxième sous-mode à richesse égale à 1 des gaz d'échappement sont émis par ledit au moins un cylindre dont au moins une partie des gaz d'échappement sont réintroduits dans l'organe d'admission par ladite au moins une ouverture utilisée dans le mode nominal en tant qu'ouverture d'admission et par une ouverture du cylindre utilisée dans le mode nominal en tant qu'ouverture d'échappement.

Avantageusement, le moteur comporte une conduite reliant au moins une ouverture utilisée dans le mode nominal en tant qu'ouverture d'admission à un organe d'admission du moteur de sorte que des gaz d'échappement s'échappant par ladite au moins une ouverture utilisée dans le mode nominal en tant qu'ouverture d'admission sont réintroduits dans l'organe d'admission par ladite conduite.

Avantageusement, le moteur comporte un compresseur de suralimentation, un refroidisseur d'air de suralimentation, et une conduite piquée en aval du refroidisseur d'air de suralimentation et rejoignant ladite au moins une ouverture utilisée dans le mode nominal en tant qu'ouverture d'admission.

Avantageusement, le moteur présente une vanne disposée sur ladite conduite piquée en aval du refroidisseur d'air de suralimentation et rejoignant ladite au moins une ouverture utilisée dans le mode nominal en tant qu'ouverture d'admission.

Avantageusement, la vanne est pilotée en position ouverte dans le mode nominal et en position fermée dans le mode à réintroduction de gaz d'échappement.

Avantageusement, le moteur comporte un catalyseur de production d'hydrogène (80) disposé sur la ligne de réintroduction de gaz d'échappement.

Avantageusement, le moteur comporte un compresseur de suralimentation et un refroidisseur d'air de suralimentation et la ligne de réintroduction de gaz d'échappement est piquée entre le compresseur de suralimentation et le refroidisseur d'air de suralimentation.

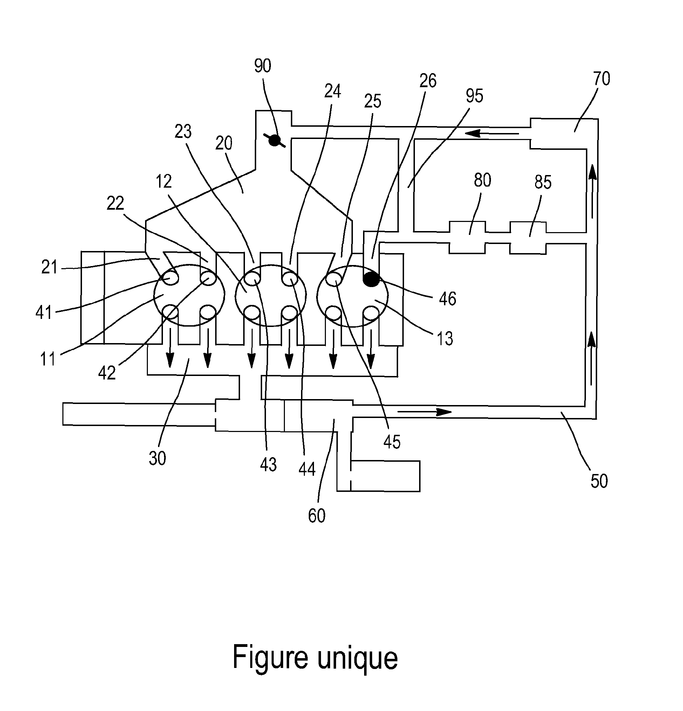

D'autres caractéristiques, buts et avantages de l'invention apparaitront à la lecture de la description détaillée qui va suivre, faite en référence à la figure unique annexée qui représente un moteur selon un mode de réalisation de l'invention.

Le moteur représenté sur la figure annexée comporte un bloc-moteur muni de quatre cylindres 11, 12, 13. Le moteur comporte en outre un répartiteur d'admission 20 débouchant dans chacun des cylindres 11, 12, 13 à chaque fois par deux conduites d'admission et par deux ouvertures d'admission par cylindre. Ainsi le cylindre 11 est alimenté par le répartiteur 20 via deux conduites 21 et 22 et deux ouvertures d'admission 41 et 42. Le cylindre 12 est alimenté par le répartiteur 20 via deux conduites 23 et 24 et deux ouvertures d'admission 43 et 44. Le cylindre 13 est alimenté par le répartiteur 20 via une conduite 25 et une ouverture d'admission 45. Le cylindre 13 présente une seconde ouverture d'admission 46 laquelle est alimentée par une conduite 26 laquelle vient de piquer sur une conduite d'arrivée d'air frais 50, le piquage de la conduite 26 se trouvant sur une conduite d'arrivée d'air frais 50 en un point situé en aval d'un compresseur de suralimentation 60 et en amont d'un refroidisseur de suralimentation 70 avant que la conduite d'air frais 50 n'arrive sur le répartiteur 20 via un papillon des gaz 90.

La conduite 26 est équipée, entre l'ouverture d'admission 46 et le piquage sur la conduite d'arrivée d'air frais 50, d'un catalyseur de production d'hydrogène 80 et d'un refroidisseur EGR 85. Un collecteur d'échappement 30 collecte en outre les gaz d'échappement émanant de chacun des cylindres 11, 12 et 13 par l'intermédiaire de deux conduites par cylindre lesquelles s'étendent à chaque fois depuis deux ouvertures d'échappement respectives. Les gaz d'échappement circulent dans une turbine entrainant le turbocompresseur 60 avant d'être rejetés dans l'atmosphère.

Dans le présent mode de réalisation on positionne un circuit D-EGR sur l'ouverture d'admission 46 du cylindre 13 et on gère l'ouverture et/ou la fermeture des soupapes d'admission et d'échappement du cylindre en fonction du mode de fonctionnement désiré. Cette architecture spécifique permet de fonctionner sélectivement en mode D-EGR, en mode EGR avec une richesse égale à 1, et en mode nominal sans EGR. Cette possibilité de sélectionner les modes de fonctionnement permet d'avoir le meilleur compromis entre performance, consommation et agrément d'utilisation selon le point de fonctionnement du moteur. Dans le présent exemple le moteur est un moteur à trois cylindres mais le système peut être exploité sur des moteurs à partir de deux cylindres.

Sur les cylindres 11 et 12 le mode de fonctionnement de la distribution, à savoir les ouvertures et fermetures des soupapes d'admission et d'échappement et la combustion, à richesse égale à 1 pour ces cylindres, restent conventionnels. Sur le cylindre dédié 13 le cycle de commande des soupapes varie selon le mode de fonctionnement désiré d'une façon que l'on va décrire maintenant.

En mode nominal, les soupapes d'échappement et d'admission sont pilotées en phase comme pour un moteur conventionnel. La soupape d'admission équipant l'ouverture 46 est fermée en charge partielle et s'ouvre quand le papillon 90 est plein ouvert. Ce mode permet un fonctionnement conventionnel du moteur.

A pleine charge dans le mode nominal, pour avoir les performances d'un moteur traditionnel, le mode ouverture et fermeture des soupapes admission et échappement est conventionnel. Le papillon des gaz 90 est en pleine ouverture et les soupapes fonctionnent en mode conventionnel. Dans cette architecture le refroidisseur 85 du circuit dédié D-EGR est alimenté par un circuit à basse température pour refroidir les gaz comprimés par le compresseur de suralimentation 60.

Dans le présent mode de réalisation, une conduite de dérivation 95 est disposée en liaison entre l'ouverture d'admission 46 et la conduite d'arrivée d'air frais 50, plus précisément par piquage sur la conduite d'admission 26 au niveau de l'ouverture d'admission 46 et par piquage sur la conduite d'arrivée d'air frais 50 en aval du refroidisseur de suralimentation 70 et en amont du répartiteur d'admission 20. Dans le cas d'un refroidisseur EGR 85 sans circuit basse température, par exemple un échangeur entre air et eau moteur à 90°c, pour avoir un meilleur remplissage par l'ouverture 46 dédiée D-EGR, cette conduite de dérivation 95 approvisionne l'ouverture d'admission 46 avec de l'air ayant traversé le refroidisseur 70 ou un mélange d'air frais et de gaz EGR ayant traversé le refroidisseur 70. L'air admis par l'ouverture 46 dédiée D-EGR est donc refroidi par ce refroidisseur 70. Dans le mode nominal, cette conduite de dérivation 95 est alors ouverte lorsque le moteur est en pleine charge.

En charge partielle dans le mode nominal, les cylindres 11 et 12 fonctionnent également comme dans le cas d'un moteur conventionnel. Sur le cylindre 13 dédié D-EGR la soupape d'admission de l'ouverture 46 reste fermée. Les autres soupapes, c'est-à-dire une soupape d'admission et deux soupapes d'échappement, fonctionnent comme dans un moteur conventionnel. La conduite de dérivation 95 est fermée. Pour ouvrir et fermer sélectivement la conduite de dérivation 95 selon la charge du moteur, on adopte ici une vanne à deux positions obturant la conduite sur commande.

En mode D-EGR, sur le cylindre 13 dédié D-EGR les soupapes d'échappement sont désactivées et restent fermées, l'admission se fait par l'ouverture d'admission 45 alimentée par le répartiteur 20 et l'échappement se fait par l'ouverture d'admission 46 dédiée D-EGR. Les soupapes des autres cylindres fonctionnent comme sur un moteur conventionnel. Dans ce mode la conduite de dérivation 95 est fermée.

Dans ce mode de fonctionnement, le cylindre 13 est un cylindre de type D-EGR. Un module de contrôle du moteur pilote une alimentation en air et en carburant du cylindre 13 de telle sorte que le cylindre 13 est le siège d'une combustion à mélange riche, c'est-à-dire en excès de carburant par rapport à l'air, ici selon une richesse d'environ 1,5. De par la richesse du mélange air-carburant, le cylindre 13 produit du gaz dihydrogène H2. Le gaz H2 ainsi produit se retrouve dans les gaz d'échappement émis par le cylindre 13 lesquels sont ensuite réintroduits à l'admission d'au moins un cylindre du moteur, ici à l'admission de l'ensemble des cylindres 11 à 13. Le moteur selon le présent exemple de réalisation ne comporte qu'un seul cylindre produisant de l'hydrogène selon le principe D-EGR. En variante le moteur peut en comporter plusieurs.

En mode EGR, on régule le taux d'EGR du moteur avec richesse égale à un dans les cylindres. La gestion du taux d'EGR se fait par l'ouverture simultanée de la soupape équipant l'ouverture d'admission 46 et des soupapes d'échappement pendant la phase d'échappement du cylindre 13. Le mode de fonctionnement EGR est similaire au mode D-EGR mais avec une richesse égale à 1 sur tous les cylindres. Pour baisser le taux d'EGR le module de contrôle du moteur modifie l'ouverture des soupapes d'échappement sur le cylindre 13 de sorte qu'une plus grande quantité de gaz d'échappement est réintroduite à l'admission au travers de l'ouverture 46. Dans ce mode la conduite de dérivation 95 est fermée.

Pour mettre en oeuvre le passage d'un mode à un autre parmi ceux décrits ci-dessus, on adopte préférentiellement un système de désactivation de soupape de type électromagnétique sur la soupape de l'ouverture d'admission dédiée 46 et sur les soupapes d'échappement du cylindre dédié 13. Tout système de commande de soupape, hydraulique, électromagnétique ou autre permettant la désactivation et/ou une ouverture dans une phase atypique de cycle peut être adopté. Ainsi, on peut adopter par exemple un poussoir électromagnétique, un actionneur électromagnétique ou encore un système à levées multiples.

Grâce au dispositif décrit ici, on améliore à la fois la boucle d'air et la physique de la combustion d'un moteur à essence à quatre temps de type suralimenté. Le système permet d'optimiser le rendement énergétique global du moteur sur toute la plage de régime et de charge du moteur et d'atteindre des niveaux de consommation spécifique très faibles, voire similaires à ceux d'un moteur diesel.

En choisissant le bon mode de fonctionnement de la boucle d'air, on garde le meilleur compromis entre consommation, performance et agrément du moteur. On améliore ainsi le système D-EGR en évitant des modifications de la face échappement.

De plus, on limite le besoin en suralimentation additionnelle produite par un compresseur du type électrique ou volumétrique par le choix du mode approprié, et on économise une vanne de dérivation à l'échappement pour autoriser les démarrages à froid ou une vanne du type trois voies pour réguler l'EGR.

## Revendications

1. Moteur à combustion de véhicule automobile à réintroduction de gaz d'échappement comprenant plusieurs cylindres de combustion (11,12,13), un organe d'admission d'air frais (20) en direction d'un ou plusieurs cylindres (11,12,13) et une ligne de réintroduction de gaz d'échappement (80,85) depuis au moins un cylindre de combustion (13) dans l'organe d'admission (20), ledit au moins un cylindre (13) dont au moins une partie des gaz d'échappement sont réintroduits dans l'organe d'admission (20) comportant au moins deux ouvertures d'admission (45,46), le moteur étant **caractérisé en ce qu'**il est configuré pour mettre en oeuvre deux modes de fonctionnement, l'un nominal où les deux ouvertures d'admission (45,46) sont utilisées en tant qu'ouvertures d'admission, l'autre à réintroduction de gaz d'échappement où des gaz d'échappement sont réintroduits dans l'organe d'admission (20) via une ouverture donnée (46) parmi lesdites au moins deux ouvertures (45,46) utilisées en tant qu'ouvertures d'admission dans le mode nominal.

2. Moteur à combustion selon la revendication 1, **caractérisé en ce que** le mode de fonctionnement à réintroduction de gaz d'échappement comporte deux sous-modes, un premier sous-mode où le cylindre (13) dont au moins une partie des gaz d'échappement sont réintroduits dans l'organe d'admission (20) fonctionne à richesse supérieure à 1 de sorte qu'il produit du gaz dihydrogène et un deuxième sous-mode où le cylindre (13) dont au moins une partie des gaz d'échappement sont réintroduits dans l'organe d'admission (20) fonctionne à richesse égale à 1.

3. Moteur à combustion selon la revendication 2, **caractérisé en ce qu'**il est configuré pour que dans le premier sous-mode à richesse supérieure à 1 au moins une ouverture du cylindre (13) utilisée en tant qu'ouverture d'échappement dans le mode nominal reste(nt) fermée(s).

4. Moteur à combustion selon la revendication 2 ou la revendication 3, **caractérisé en ce qu'**il est configuré pour que dans le deuxième sous-mode à richesse égale à 1 des gaz d'échappement sont émis par ledit au moins un cylindre (14) dont au moins une partie des gaz d'échappement sont réintroduits dans l'organe d'admission (20) par ladite au moins une ouverture (46) utilisée dans le mode nominal en tant qu'ouverture d'admission et par une ouverture du cylindre (13) utilisée dans le mode nominal en tant qu'ouverture d'échappement.

5. Moteur à combustion selon l'une quelconque des revendications précédentes, **caractérisé en ce qu'**il comporte une conduite (80,85,70) reliant au moins une ouverture (46) utilisée dans le mode nominal en tant qu'ouverture d'admission à un organe d'admission (20) du moteur de sorte que des gaz d'échappement s'échappant par ladite au moins une ouverture (46) utilisée dans le mode nominal en tant qu'ouverture d'admission sont réintroduits dans l'organe d'admission (20) par ladite conduite (80,85,70).

6. Moteur à combustion selon l'une quelconque des revendications précédentes, **caractérisé en ce qu'**il comporte un compresseur de suralimentation (60), un refroidisseur d'air de suralimentation (70), et une conduite (95) piquée en aval du refroidisseur d'air de suralimentation (70) et rejoignant ladite au moins une ouverture (46) utilisée dans le mode nominal en tant qu'ouverture d'admission.

7. Moteur selon la revendication précédente, **caractérisé en ce qu'**il présente une vanne disposée sur ladite conduite (95) piquée en aval du refroidisseur d'air de suralimentation (70) et rejoignant ladite au moins une ouverture (46) utilisée dans le mode nominal en tant qu'ouverture d'admission.

8. Moteur à combustion selon la revendication précédente, **caractérisé en ce que** la vanne est pilotée en position ouverte dans le mode nominal et en position fermée dans le mode à réintroduction de gaz d'échappement.

9. Moteur selon l'une quelconque des revendications précédentes, **caractérisé en ce qu'**il comporte un catalyseur de production d'hydrogène (80) disposé sur la ligne (80,85) de réintroduction de gaz d'échappement.

10. Moteur selon l'une quelconque des revendications précédentes, **caractérisé en ce qu'**il comporte un compresseur de suralimentation (60) et un refroidisseur d'air de suralimentation (70) et la ligne de réintroduction de gaz d'échappement (80,85) est piquée entre le compresseur de suralimentation (60) et le refroidisseur d'air de suralimentation (70).
